# EUROPÄISCHE PATENTSCHRIFT

(11) **EP 0 592 473 B1**
(45) Veröffentlichungstag und Bekanntmachung des Hinweises auf die Patenterteilung: **09.10.1996**
(21) Anmeldenummer: 92912497.2
(22) Anmeldetag: 22.06.1992
(51) Int. Cl.: B29C 70/14, C08J 5/06

(54) **HERSTELLUNG VON VERBUNDWERKSTOFFEN AUS POLYMERPULVERDISPERSIONEN**
PRODUCTION OF COMPOSITES FROM POWDER DISPERSIONS OF POLYMERS
PROCEDE DE FABRICATION DE MATERIAUX COMPOSITES A PARTIR DE DISPERSIONS PULVERULENTES DE POLYMERES

(30) Priorität: 03.07.1991 DE 4121915
(43) Veröffentlichungstag der Anmeldung: 20.04.1994
(73) Patentinhaber: HOECHST AKTIENGESELLSCHAFT, 65926 Frankfurt am Main (DE)
(72) Erfinder: HINHRICHSEN, Georg, D-1000 Berlin 45 (DE); VODERMAYER, Albert, D-1000 Berlin 30 (DE); REICHERT, Karl-Heinz, D-1000 Berlin 19 (DE); KUHNERT, Lothar, D-1000 Berlin 41 (DE); LINDNER, Wolfgang, D-4047 Dormagen (DE); GOLDMANN, Gerd, D-4150 Krefeld (DE)
(86) Internationale Anmeldenummer: EP9201395
(87) Internationale Veröffentlichungsnummer: WO9301045

(56) Entgegenhaltungen:
- EP-A- 0 206 134
- WO-A-88/03468
- US-A- 3 933 545
- US-A- 4 626 306
- US-A- 4 680 224
- Patent Abstracts of Japan, Band 9, Nr 206, M406, Zusammenfassung von JP 60- 67136, publ 1985-04-17 (MITSUBISHI DENKI K.K.)

## Beschreibung

Gegenstand der Erfindung ist ein Verfahren zur Herstellung von unidirektional-verstärkten Verbundwerkstoffen mit gleichbleibendem Thermoplast gehalt gemäß dem Oberbegriff des Patentanspruchs 1. Ferner betrifft die Erfindung einen Verbundwerkstoff.

Solche Verfahren sind prinzipiell bekannt. In der Regel wird das Thermoplastpulver auf den in Längsrichtung durch die Pulverdispersion bewegten Faserstrang aufgegeben, aus diesem Faserstrang das Dispergiermittel entfernt, beispielsweise durch Aufheizen, dann der Thermoplast aufgeschmolzen und der Verbundwerkstoff, beispielsweise durch Walzen, konsolidiert.

Bei den bekannten Verfahren bereitet die Abscheidung einer gleichbleibenden Pulvermenge auf dem das Dispersionsbad durchlaufenden Faserstrang große Schwierigkeiten, weil dazu zum einen der Feststoffgehalt in der Pulverdispersion und zum anderen die von dem Faserstrang mitgenommene Pulvermenge konstant gehalten werden müssen. Wenn die Konzentration in unmittelbarer Umgebung des Stranges schwankt und nicht immer exakt der mittleren Konzentration der nachgelieferten Dispersion entspricht, schwankt auch die Thermoplastmenge im Endprodukt.

Schwankungen der Thermoplastmenge machen sich aber im Endprodukt sehr ungünstig bemerkbar, weil dadurch ihr Fasergehalt und die genauen Abmessungen der erzeugten Verbundwerkstoffe beeinflußt werden.

In der US-A-3,933,545 wird ein Verfahren offenbart, bei dem man ein Pulver eines thermoplastischen Polymers auf einen heißen Faserstrang aufbringt, diesen mit Polymerpulver beladenen Faserstrang durch eine geheizte Röhre zieht, um das Pulver zu schmelzen, und anschließend durch eine Form zieht, um das Produkt zu verfestigen und überschüssiges Polymer zu entfernen. Dieses überschüssige Polymer wird in der Form als Schmelzebad angesammelt, und dessen Menge bestimmt. Über die im Schmelzebad vorhandene Menge an Polymer wird die Zugabe des Polymerpulvers geregelt.

In der US-PS 4 626 306 beispielsweise wird die Thermoplastmenge bei Verwendung einer wäßrigen Polymerpulverdispersion dadurch eingestellt, daß der pulverbeladene Faserstrang nach dem Verlassen des Dispersionsbades durch einen Walzenspalt geführt wird, um überschüssiges Polymerpulver zusammen mit Dispergiermittel aus dem Faserstrang herauszupressen. Bei dieser Methode besteht die Gefahr einer Schädigung der hochempfindlichen Verstärkungsfasern, insbesondere bei Kohlenstoffasern; Zudem können entstehende oder bereits im Strang enthaltene gebrochene Filamente auf den rotierenden Walzen haften und sich aufwickeln, wodurch Störungen bei der Kalibrierung der Thermoplastmenge und im gesamten Prozeß auftreten. Der Einfluß der Änderungen der Polymerkonzentration im Bad wird gar nicht berücksichtigt.

Bei dem Verfahren nach US-PS 4 680 224 wird der Faserstrang nach der Pulverbeladung in einem Dispersionsbad in einer beheizten Düse kalibriert. Da eine solche Kalibrierung, insbesondere bei Fasergehalten über 45 Vol.-%, erfahrungsgemäß sehr leicht zu Fadenabrissen führt, konnten auch nur Abzugsgeschwindigkeiten von maximal 30,5 cm/min erreicht werden.

Eine weitere betriebstechnische Schwierigkeit der bisherigen Verfahren ist die lokale Stabilisierung der Polymerkonzentration im Bad. Gleichbleibender Thermoplastgehalt des ablaufenden Stranges ist nämlich nur dann gewährleistet, wenn der Faserstrang im Bad stets durch eine Suspension mit gleichem lokalem Teilchengehalt läuft. Zeitabhängige Sedimentations- oder Aufwirbelungseffekte bewirken Unterschiede im Thermoplastgehalt des Stranges, der das Bad in der Regel mit relativ hoher Geschwindigkeit und deswegen geringer Verweilzeit durchläuft.

Die bisherigen Verfahren erreichen eine zumindest teilweise verbesserte lokale Vergleichmäßigung der Suspensionskonzentration durch Zusatz größerer Mengen von Dispergierhilfsmitteln und Verdickungsmitteln. So wird im Extremfall bei dem Verfahren nach WO 88/03468 durch Zusätze die Viskosität einer wäßrigen Dispersion bis auf Werte von mindestens 50 Pas gesteigert.

Je höher der Anteil an Dispergiermitteln und anderen Fremdsubstanzen, desto höher ist jedoch auch ihr prinzipiell unerwünschter und nachteiliger Anteil im Endprodukt. Bei Verstärkung mit Glasfasern lagern sich beispielsweise hydrophile Gruppen enthaltende Stoffe wegen der ebenfalls hydrophilen Oberfläche des Glases bevorzugt in der Grenzfläche zwischen Faser und Matrix ab. Dadurch besteht u.a. die Gefahr einer Verschlechterung der mechanischen Eigenschaften. Insbesondere können dies zu den hydrophilen Gruppen in der Grenzfläche wandernde Wassermoleküle bewirken Ebenso können thermische Schädigungen bereits unterhalb der Wärmeformbeständigkeit bei Temperatur der eingesetzten Kunststoffe auftreten.

Bei höheren Badviskositäten kann die Suspension den aus einer Vielzahl von Filamenten bestehenden Faserstrang schwerer durchströmen wodurch die gleichmäßige Ablagerung der Pulverpartikel zwischen die einzelnen Filamente aufwendiger wird. Beispielsweise werden bei Verwendung von Umlenkstiften im Imprägnierbad die Umschlingungswinkel und Abzugskräfte höher, was zu einer Verringerung der möglichen Produktionsgeschwindigkeiten und zu einer Erhöhung der Faserschädigungen führt.

Aufgabe der vorliegenden Erfindung war es daher, ein Verfahren zur Herstellung von unidirektional-verstärkten Verbundwerkstoffen bereitzustellen, das die aus dem Stand der Technik bekannten Nachteile, insbesondere Schwankungen der Thermoplastmenge sowie auftretende Faserschädigung, weitestgehend vermeidet.

Diese Aufgabe wird gelöst durch ein Verfahren zur Herstellung von unidirektional-verstärkten Verbundwerkstoffen mit gleichbleibendem Thermoplastgehalt, indem man einen Faserstrang in Längsrichtung durch ein Bad mit einer Dispersion eines Thermoplastpulvers bewegt, das Dispergiermittel entfernt und den Faserstrang zum Aufschmelzen des Thermoplasten erhitzt, dadurch gekennzeichnet, daß man die Breite des aus dem Bad austretenden Faserstrangs bestimmt und diesen Meßwert zur Regelung des Polymergehaltes der Dispersion benutzt.

Zweckmäßige Weiterbildungen der Erfindung sind in den abhängigen Ansprüchen beschrieben.

Ferner wird diese Aufgabe durch Verbundwerkstoffe gemäß Anspruch 6 gelöst.

Dieses Verfahren ist in der Lage, unidirektional verstärkte Verbundwerkstoffe mit hohen Zugfestigkeiten und hoher Konstanz des Thermoplastanteils, d.h. mit weitgehend konstantem Faseranteil und weitgehend konstanten Abmessungen, aus einer Thermoplastpulver-Dispersion zu erzeugen.

Dem liegt die Erkenntnis zugrunde, daß die Breite des aus dem Dispersionsbad austretenden Faserstranges bei konstanter mittlerer Korngröße des Thermoplastpulvers in eindeutiger Weise von seinem Gehalt an Thermoplastpulver abhängt.

Damit wurde ein Meßverfahren für die lokale Polymerkonzentration im Dispersionsbad im Bereich des durchlaufenden Faserstranges gefunden; denn bei konstanter Abzugsgeschwindigkeit hängt - wie oben erklärt - die Breite des Faserstranges von seinem Gehalt an Thermoplastpulver und dieser selbst von der lokalen Polymerkonzentration ab.

Bei stationären Konzentrationsverhältnissen im Bad ergibt sich empirisch sogar eine eindeutige Abhängigkeit der Brandbreite von der Brutto-Konzentration des Dispersionsbades (im Kurzzeitversuch experimentell bestätigt). In weiten Bereichen ist diese Funktion sogar linear.

Demnach eignet sich der Messwert der Breite des aus dem Dispersionsbad austretenden Faserstranges zur Einstellung des Thermoplast-Gehaltes im Endprodukt. Wird diese Bandbreite zeitlich konstant gehalten, so ist auch der Thermoplast-Gehalt im Verbundwerkstoff konstant. Stellgröße dafür ist die Brutto-Polymerkonzentration des Bades, deren Änderung auch die lokale Pulverkonzentration im Bereich des Faserstranges verändert.

Die Polymer-Konzentration wird bevorzugt durch Zugabe von Dispersionen mit verschiedener Polymer-Konzentration geregelt. Bevorzugt werden dazu drei Dispersionen mit verschiedenen Konzentrationen verwendet, deren mittlere man auf den Erwartungswert der Konzentration im ablaufenden Strang einstellt. Die Zulaufmengen können durch eine Niveauregelung des Bades eingestellt werden.

Die Breite des Faserstranges kann bevorzugt im lokalen Zusammenhang mit einem oder mehreren Umlenkungstiften, die den Strang zumindest leicht spreizen, gemessen werden. Die Messung selbst ist nach verschiedenen Methoden möglich.

Bevorzugt sind berührungslose Meßmethoden, beispielsweise optische oder laseroptische Verfahren.

Als Dispergiermittel wird bevorzugt Wasser eingesetzt. Es ist jedoch auch die Verwendung anderer Substanzen möglich, insbesondere von organischen Lösungsmitteln. Die Konzentration der Dispersion wird auf 30-300 g/l Dispergiermittel, bevorzugt 50-150 g/l Dispergiermittel eingestellt.

Für das erfindungsgemäße Verfahren ist kein vollständig homogen durchmischtes Dispersionsbad erforderlich, weil die Strangbreite ein Maß für die lokale Polymerkonzentration an der Stelle ist, an der der Strang mit Polymerpulver belegt wird.

Deswegen kann mit sehr niedrigen Viskositäten der Dispersion gearbeitet werden. Die Viskosität beträgt maximal 50 mPas., bevorzugt maximal 10 mPas, besonders bevorzugt liegt sie unter 4 mPas. Daher wird auf Hilfsmittel, die nur eine Erhöhung der Viskosität der Dispersion zum Ziel haben, völlig verzichtet.

Aus dem gleichen Grund kann auch die Menge von Dispergierhilfsmitteln niedrig gehalten werden, d.h. unter 0,3 Gew.-%, bevorzugt unter 0,15 Gew.-%, bezogen auf die fertige Dispersion.

Als Dispergierhilfsmittel eignen sich insbesondere nichtionische grenzflächenaktive Substanzen, wie sie durch Ethoxylierung von Fettalkoholen, Fettsäuren, Glycerinfettsäureestern, Alkylglycosiden, Alkylphenolen, Polypropylenglykolen, Alkylaminen oder Fettsäureamiden hergestellt werden. Geeignet sind ebenfalls nicht-ionische Tenside auf Siliciumbasis oder mit Perfluoralkylketten.

Die Teilchen werden zusätzlich durch Bewegung des Dispersionsbades, bevorzugt durch Rühren, Umpumpen oder Durchleiten eines Gasstromes, in der Schwebe gehalten.

Der Faserstrang kann im Dispersionsbad bevorzugt über feststehende Umlenkkörper, die vorzugsweise zylindrisch mit Radien zwischen 2 und 120 mm ausgebildet sind, geführt werden. Aber auch jede andere Gestaltung der Mantelflächen, beispielsweise mit kegel-, kugel-, parabolid-, hyperboloidförmigen oder nach beliebigen Funktionen gekrümmten Oberflächenelementen, ist möglich.

Bei Verwendung zylindrischer Umlenkkörper werden bevorzugt 2 bis 10 Stifte eingesetzt. Der gesamte Umschlingungswinkel des Stranges über die Summe der Stifte kann relativ klein sein. Er liegt unter 480° , bevorzugt unter 270°, besonders bevorzugt unter 170°.

Das Verfahren arbeitet mit niedrigen Abzugskräften und ist sehr faserschonend. Deswegen ermöglicht es hohe Produktionsgeschwindigkeiten bis zu 100 m/min, mindestens jedoch 8 m/min, bevorzugt mindestens 15 m/min, besonders bevorzugt mindestens 25 m/min. In der Praxis hängt die eingestellte Geschwindigkeit wesentlich von der Art der Verstärkungsfaser ab. Dabei sind sprödere Fasern, wie HM-Kohlenstoffasern, deutlich schwerer zu verarbeiten als beispielsweise Aramidfasern.

Das Thermoplastpulver kann aus allen handelsüblichen oder auch modifizierten Thermoplasten bestehen.

Das Pulver muß einen niedrigeren Erweichungs- bzw. Schmelzpunkt besitzen als das Material, aus dem die Verstärkungsfasern bestehen. In Frage kommen beispielsweise Thermoplaste im weitesten Sinne, d.h. Stoffe, die sich reversibel oder intermediär thermoplastisch verhalten. Beispiele für Thermoplaste sind Polyolefine, Vinylpolymerisate wie Polyvinylhalogenide, Polyvinylester, Polyvinylether, Polyacrylate und Polymethacrylate, organische Celluloseester, sowie Polyamide, Polyurethane, Polyharnstoffe, Polyimide, Polyester, Polyether, Polystyrole, Polyhydantoine, Polyphenylenoxide, Polyarylensulfide, Polysulfone, Polycarbonate, Verbindungen mit polymerisations- und/oder polyadditionsfähigen Doppelbindungen, Polyimidvorläufer, Polyetherketone, Polyetheretherketone, Polyethersulfone, Polyetherimide, Polyamidimide, Polyfluoralkene, Polyestercarbonate und Liquid-crystal-Polymere; ferner unpolare thermoplastische Polymere (wie z.B. Polyolefine), denen polare Gruppen aufgepfropft wurden.

Bevorzugte Thermoplaste sind Polyethylene, Polypropylene, Polybutylene, Polypentene, Polyvinylchloride, Polymethylmethacrylate, Polyacrylnitrile, Polymethacrylnitrile, Polystyrol enthaltende Mehrphasenkunststoffe wie ABS, Polyamide des Typs 6, Polyamide des Typs 6-6, Polyamide des Typs 12, Polyethylenterephthalate, Bisphenol-A-Polycarbonate, Polyphenylensulfide, Polyetherketone, Polyetheretherketone, Polyethersulfone, Polysulfone, Polyetherimide, Polyamidimide, Polyestercarbonate und Liquid-crystal-Polymere, sowie Polypropylen, dem polare Gruppen aufgepfropft wurden.

Die Thermoplaste können auch in den verschiedensten Kombinationen vorliegen, z.B. als Copolymere, Blockcopolymere, Pfropfpolymere, Mischpolymere und Polymergemische.

Die verwendbaren Korngrößen des Pulvers liegen unter 350 µm, bevorzugt unter 100 µm, besonders bevorzugt unter 20 µm.

Der chemische Aufbau der Verstärkungsfasern kann von der unterschiedlichsten Art sein. Sie können auch aus thermoplastischem Material bestehen. Wesentlich ist nur, daß die Verstärkungsfasern einen höheren Erweichungs-, bzw. Schmelzpunkt besitzen, als die jeweils vorliegende Thermoplast-Matrix, so daß sie nach dem Aufschmelzen der Thermoplast-Matrix als festes Gerüst zurückbleiben. Beispiele für Fasermaterialien sind anorganische Materialien wie silikatische und nicht-silikatische Gläser der verschiedensten Art, Kohlenstoff, Bor, Siliciumcarbid, Metalle, Metallegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Liquid-crystal-Polymere und Polyphenylensulfid, Polyetherketone, Polyetheretherketone, Polyetherimide.

Der Fasergehalt der Verbundwerkstoffe liegt bei 20 bis 75 Vol-%, bevorzugt bei 45 bis 65 Vol-%.

Messungen ergeben, daß die zeitlichen Schwankungen des Thermoplastgehaltes im erzeugten Verbundwerkstoff tatsächlich gering sind. Sie liegen unter 3 %, bevorzugt unter 2 %, besonders bevorzugt unter 1,5 % des im Verbundwerkstoff enthaltenen Thermoplastvolumens. Bei einem Verbundwerkstoff mit einem Faseranteil von 60 Vol-% ergibt sich damit eine Toleranz im Fasergehalt von 1,2 Vol-%, bevorzugt 0,8 Vol-%, besonders bevorzugt 0,6 Vol-%. Daraus errechnen sich entsprechend geringe Toleranzen in den Abmessungen des Verbundwerkstoffes.

Die erzeugten Verbundwerkstoffe weisen hohe Reißfestigkeiten auf. Bei Verwendung von Glasfasern, Aramidfasern und HT-Kohlenstoffasern werden 85 %, bevorzugt 90 %, besonders bevorzugt 95 % der theoretischen Reißfestigkeiten erreicht. Die theoretischen Werte sind dabei als reine Faserfestigkeiten nach Angaben des Faser-Herstellers ohne Berücksichtigung der vergleichsweise geringen Festigkeit der Matrix gerechnet.

### Beispiel 1

Ein Kohlenstoffaser-Roving mit 12 000 Filamenten (12 K) der Type Celion HTA 7C G30-500 wird mit einer Geschwindigkeit von 2,9 m/min durch eine wäßrige Pulverdispersion mit Polyphenylensulfid (PPS)-Pulver gezogen. Das Pulver hat eine durchschnittliche Teilchengröße von 20 µm. Als Dispergierhilfsmittel dient das nichtionische Tensid "Cremophor" A 25 (BASF), das in einer Konzentration von 2 g/l Wasser zugegeben wird.

Der Faserstrang wird in der Dispersion über 5 Stifte geführt, die Summe der Umschlingungswinkel des Faserstranges um die Stifte beträgt 128°.

Es zeigt sich, daß die Rovingbreite im Austritt in eindeutiger Weise vom Fasergehalt im Roving abhängt und dieser Fasergehalt wiederum eindeutig vom Pulvergehalt in der Dispersion. Im einzelnen werden gemessen:

| Rovingbreite mm | Fasergehalt im Roving Vol-% | Pulvergehalt in der Dispersion g/l |
|---|---|---|
| 8,2 | 57,3 | 100 |
| 10,2 | 50,2 | 125 |
| 11,4 | 45,5 | 150 |
| 12,2 | 40,3 | 175 |
| 14,1 | 34,4 | 200 |

### Beispiel 2

Mit denselben Materialien und identischem konstruktivem Aufbau des Dispersionsbades wie in Beispiel 1 wird die Geschwindigkeit des Rovings bei einem konstanten Pulvergehalt der Dispersion von 100 g/l und einem Tensid-Gehalt von 1 g/l variiert. Der Fasergehalt im Roving und damit die Rovingbreite hängt eindeutig von der Stranggeschwindigkeit ab. Es ergeben sich folgende Meßwerte:

| Geschwindigkeit m/min | Fasergehalt im Roving Vol-% | Rovingbreite mm |
|---|---|---|
| 0,5 | 41,7 | 12,9 |
| 1,0 | 49,5 | 11,1 |
| 1,5 | 53,3 | 10,2 |
| 2,0 | 55,2 | 9,4 |
| 2,9 | 57,5 | 8,3 |

### Beispiel 3

Mit denselben Materialien und identischem konstruktivem Aufbau des Dispersionsbades wie in Beispiel 1 wird die Geschwindigkeit des Rovings auf 19 m/min gesteigert. Der Pulvergehalt der Dispersion beträgt 130 g/l, der Tensid-Gehalt 1,3 g/l. Der austretende Roving hat eine Breite von 7,1 mm und einen Fasergehalt von 68 Vol.-%.

### Beispiel 4

Unter ansonsten gleichen Bedingungen wie in Beispiel 3 wird ein Roving aus Aramid-Faser (Twaron HM 1056, 805 tex, Hersteller: Akzo) mit einer Geschwindigkeit von 3 m/min durch die Dispersion gezogen. Die Teilchengröße beträgt 22 µm, die Pulver-Konzentration 100 g/l. Der austretende Roving hat eine Breite von 6,2 mm und einen Fasergehalt von 58 Vol.-%.

### Beispiel 5

Das Dispersionsbad nach Beispiel 1 wird in ein Gesamtverfahren integriert. Es werden die gleichen Stoffe verwendet. Beim Ansatz der Dispersion werden auf 1000 g Wasser 95 g PPS-Pulver und 0,9 g Cremophor zugegeben. Die entstandene Dispersion hat eine niedrige Viskosität von 2 mPas.

Ein von der Spule abgezogener 12 K-Roving wird kontinuierlich mit einer Geschwindigkeit von 3,5 m/min durch das Dispersionsbad gezogen und nach der Breitenmessung zunächst in einem rohrförmigen Heißluftofen mit einer Länge von 1,6 m durch einen im Gegenstrom geschalteten Heißluftstrom getrocknet. Die Ofentemperatur beträgt am Eintritt 330°C, in der Mitte 400°C und am Austritt 370°C.

In einem nachfolgenden zweiten Ofen wird das Polymerpulver vollständig aufgeschmolzen. Dieser Strahlungsofen hat eine Länge von 0,6 m und eine Temperatur von 370°C. Im nächsten Schritt wird der heiße Strang im Walzenspalt einer mit 80°C temperierten Konturwalze aus Stahl konsolidiert und abgekühlt. Die Walzenandruckkraft beträgt 58 N. Hinter der Walze ist der Abzug angeordnet, der den Strang durch die gesamte Anlage zieht.

Der hergestellte unidirektional-verstärkte Verbundwerkstoff weist einen Fasergehalt von 59 Vol.-% auf. Die Reißfestigkeit beträgt 2120 mPa. Bei einer vom Hersteller angegebenen Reißfestigkeit der Verstärkungsfaser von 3792 mPa wird somit 94,8 % der theoretischen Reißfestigkeit erreicht. Die Volumen-Schwankungen liegen unter 1,2 %, bezogen auf das Thermoplastvolumen im Verbundwerkstoff, bzw. unter 0,5 %, bezogen auf den gesamten Verbundwerkstoff.

## Patentansprüche

1. Verfahren zur Herstellung von unidirektional-verstärkten Verbundwerkstoffen mit gleichbleibendem Thermoplastgehalt, indem man einen Faserstrang in Längsrichtung durch ein Bad mit einer Dispersion eines Thermoplastpulvers bewegt, das Dispergiermittel entfernt und den Faserstrang zum Aufschmelzen des Thermoplasten erhitzt, dadurch gekennzeichnet, daß man die Breite des aus dem Bad austretenden Faserstrangs bestimmt und diesen Meßwert zur Regelung des Polymergehaltes der Dispersion benutzt.

2. Verfahren nach Anspruch 1, dadurch gekennzeichnet, daß die Dispersion Viskositäten von maximal 50 mPas aufweist.

3. Verfahren nach Anspruch 1, dadurch gekennzeichnet, daß die der Dispersion zugegebene Menge an Dispergierhilfsmittel unter 0,3 Gew.-%, bezogen auf die fertige Dispersion, liegt.

4. Verfahren nach Anspruch 1, dadurch gekennzeichnet, daß Abzugsgeschwindigkeiten über 8m/min erreicht werden.

5. Verfahren nach Anspruch 1, dadurch gekennzeichnet, daß die Schwankungen des Thermoplastanteils der erzeugten Verbundwerkstoffe unter 3 % des in den Verbundwerkstoffen enthaltenen Thermoplastvolumens liegen.

6. Verbundwerkstoffe, erhalten nach einem Verfahren gemäß mindestens einem der Ansprüche 1 bis 5, dadurch gekennzeichnet, daß sie Reißfestigkeiten aufweisen, die bei Verwendung von Glasfasern, Aramidfasern und HT-Kohlenstoffasern über 85 % der theoretischen Reißfestigkeiten liegen.

## Claims

1. Process for producing unidirectionally reinforced composites having a constant thermoplastic content by moving a fiber strand in the longitudinal direction through a bath of a dispersion of a thermoplastic powder, removing the dispersing medium and heating the fiber strand until the thermoplastic melts, characterized in that the width of the fiber strand emerging from the bath is determined and this measured value is used to regulate the polymer content of the dispersion.

2. Process according to claim 1, characterized in that the dispersion has viscosities of at most 50 mPas.

3. Process according to claim 1, characterized in that the amount of dispersing assistant added to the dispersion is below 0.3% by weight, based on the ready-prepared dispersion.

4. Process according to claim 1, characterized in that take-off speeds above 8 m/min are achieved.

5. Process according to claim 1, characterized in that the transitory variations in the thermoplastic content of the composites produced are below 3% of the thermoplastic volume present in the composites.

6. Composites obtained by a process according to at least one of claims 1 to 5, characterized in that they have tensile strengths which, if glass fibers, aramid fibers and HT carbon fibers are used, are above 85% of the theoretical tensile strengths.

## Revendications

1. Procédé pour la préparation de matériaux composites à renfort unidirectionnel avec une teneur constante en thermoplastiques, par mouvement d'un écheveau de fibres dans le sens de la longueur à travers un bain avec une dispersion de la poudre thermoplastique, en éliminant l'agent dispersant et en chauffant l'écheveau de fibres pour faire fondre le thermoplastique, caractérisé en ce que l'on détermine la largeur de l'écheveau de fibres sortant du bain et en ce que l'on utilise cette valeur mesurée pour le réglage de la teneur en polymères de la dispersion.

2. Procédé selon la revendication 1, caractérisé en ce que la dispersion présente des viscosités au maximum de 50 mPas.

3. Procédé selon la revendication 1, caractérisé en ce que la quantité en adjuvant de dispersion ajoutée à la dispersion est inférieure à 0,3 % en poids par rapport à la dispersion finie.

4. Procédé selon la revendication 1, caractérisé en ce que l'on peut atteindre des vitesses de déroulement supérieures à 8 m/minute.

5. Procédé selon la revendication 1, caractérisé en ce que les variations dans le taux de thermoplastique du matériau composite préparé sont inférieures à 3 % du volume de thermoplastiques contenu dans le matériau composite.

6. Matériau composite obtenu selon un procédé selon au moins l'une des revendications 1 à 5, caractérisé en ce qu'il présente des résistances à la rupture qui sont supérieures à 85 % des résistances à la rupture théorique lorsqu'on utilise les fibres de verre, les fibres aramides et les fibres de carbone HT.
